# EUROPEAN PATENT APPLICATION

(11) **EP 4 141 256 A1**
(43) Date of publication of application: **01.03.2023**
(21) Application number: 21194060.6
(22) Date of filing: 31.08.2021
(51) Int. Cl.: F03D 80/00

(54) **OPERATION OF A DISCONNECTED WIND TURBINE**

(71) Applicant: Siemens Gamesa Renewable Energy A/S, 7330 Brande (DK)
(72) Inventor: Hawkins, Samuel, 7100 Vejle (DK); Nielsen, Rene Salkvist, 7451 Sunds (DK)
(74) Representative: SGRE-Association

(57) **Abstract**

A method of operating a wind turbine is provided, wherein the wind turbine is not connected to or has become disconnected from a power grid (200) that is capable of supplying electrical power to the wind turbine (100). The method comprises operating the wind turbine (100) in a first operating mode (71) in which an auxiliary system (10) of the wind turbine is supplied with electrical power from an energy storage system (50) of the wind turbine, wherein in the first operating mode (71), a first group (11) of auxiliary power consumers (12, 13, 14) of the auxiliary system (10) and a second group (21) of auxiliary power consumers (22, 23, 24) of the auxiliary system (10) are supplied with electrical power from the energy storage system (50). Upon fulfillment of a predefined condition, the wind turbine (100) is operated in a second operating mode (72) in which the power supply from the energy storage system (50) to the first group (11) of auxiliary power consumers (12, 13, 14) is ceased. Upon a charging state of the energy storage system (50) reaching or dropping below a predetermined charging level, the wind turbine (100) may be operated in a third operating mode (73) in which auxiliary power supply is ceased.

## Description

### FIELD OF THE INVENTION

The present invention relates to a method of operating a wind turbine that is not connected to or has become disconnected from a power grid. It further relates to a respective wind turbine control system for performing such method.

### BACKGROUND

Wind turbines extract energy from the moving wind stream. Wind conditions are intermittent and therefore the wind turbine cannot continuously extract energy. Below a certain wind speed, wind turbines will generally cease to generate electrical energy. Small wind turbines are known that have a passive yaw system and that can thus continue to track the wind direction and remain prepared for a restart when wind speed picks up again. Likewise, such wind turbines can be equipped with passive systems for stopping operation above certain high wind speeds and for returning to normal operation below these.

For modern multi-megawatt wind turbines, active systems are required to yaw and pitch the wind turbine and to prepare the electrical system for generating power. Such active systems furthermore require a continuous monitoring of the wind conditions in order to determine when the wind conditions are appropriate for returning to normal operation. Electrical power required for operating such active systems is generally drawn from the electrical power grid, such as a utility grid, to which the wind turbine is connected and into which the wind turbine feeds electrical power. However, there are situations in which the wind turbine may become disconnected from such power grid, for example during a fault condition on the power grid or when losing the external power connection for other reasons. Generally, the wind turbines are shut down when no external power connection is available, as the wind turbine cannot feed electrical power into the grid. However, there are situations in which it is beneficial to continue operation of the wind turbine even when disconnected from the grid, for example to power environmental systems of an offshore wind turbine. Also, wind turbines can be operated in an island mode, for example either for powering loads local to the wind turbine, or for producing hydrogen via electrolysis. No grid connection may be available for such wind turbines, from which the respective active systems can be powered.

To address such problems, the document WO 2018 145801 A1 describes the use of an energy storage connected to a DC part of an auxiliary converter that can be used to power auxiliary components of the wind turbine. The energy storage provides power for a limited amount of time and may be used for an improved grid fault ride through capability or an improved frequency control.

The document EP 3 051 124 B1 furthermore describes the operation of a wind turbine without grid connection, wherein the wind turbine is black-started by making use of an electrical energy storage device, the wind turbine thereafter operating to supply the auxiliary operating systems of the wind turbine with electrical power.

The disclosed methods work well in particular situations, for example for bridging a short period of time (ride-through) or for black-starting a wind turbine. However, they are generally not suitable for keeping a grid disconnected wind turbine operable for prolonged periods of time. Furthermore, these methods generally rely on a re-establishing of the grid connection within a short period of time. If a grid connection cannot be re-established, it is further generally difficult to re-start such wind turbines after they have been disconnected for a prolonged period of time.

### SUMMARY

Accordingly, there is a need to mitigate at least some of the drawbacks mentioned above and to improve the operation of a wind turbine that is not connected to a power grid or that has become disconnected from such power grid.

This need is met by the features of the independent claims. The dependent claims describe embodiments of the invention.

According to an embodiment of the invention, a method of operating a wind turbine is provided, wherein the wind turbine is not connected to or has become disconnected from a power grid. Power grid may in particular refer to a power grid capable of supplying the wind turbine with electrical power. The method comprises operating the wind turbine in a first operating mode in which an auxiliary power system of the wind turbine is supplied with electrical power from an energy storage system of the wind turbine. In the first operating mode, a first group of auxiliary power consumers of the auxiliary power system and a second group of auxiliary power consumers of the auxiliary power system are supplied with electrical power from the energy storage system. The first group may comprise at least one auxiliary power consumer having a power consumption that is higher than a power consumption of at least one auxiliary power consumer comprised in the second group. Upon fulfillment of a predefined condition, the wind turbine is operated in a second operating mode in which the power supply from the energy storage system to the first group of auxiliary power consumers is ceased (e.g. stopped or terminated) and the power supply from the energy storage system to the second group of auxiliary power consumers is maintained. Additionally or alternatively, upon a charging state (e.g. SOC) of the energy storage system reaching or dropping below a predetermined charging level, the wind turbine is operated in a third operating mode in which power supply from the power storage system to the first group of auxiliary power consumers is ceased and power supply from the power storage system to the second group of auxiliary power consumers is ceased.

By providing such different operating modes when no grid connection via which power can be received is available, the energy stored in the energy storage system can be conserved and operation of the wind turbine in such state can be prolonged. The first operating mode, which may also be termed "local power mode", may for example keep all components of the auxiliary system operable and may thus allow a startup of the wind turbine for the purpose of electrical power generation. The second operating mode, which may be termed "sleep mode", may allow the wind turbine to track current wind conditions and to re-enter the first operating mode for starting up the wind turbine when suitable conditions prevail. At the same time, electrical power consumption from the energy storage system is minimized. Further, the third operating mode, which may be termed "hibernate mode", may provide maximum conservation of energy available in the energy storage system, while at the same time ensuring that sufficient energy is available for re-entering the first operating mode and re-starting the wind turbine. Consequently, even if there is no external grid connection and no other external source of electrical power available, the wind turbine can stay operable for prolonged periods of time and allow the resuming of energy production even if a fault condition or low wind conditions have prevailed for long periods of time, it may for example be configured to stay operable for at least 2, 3 or even 5 days. The different operating modes in particular allow the wind turbine to operate continuously without connection to an external power grid, regardless of environmental conditions.

In an embodiment, in the first operating mode, and in the second and/or third operating modes, the auxiliary power system does not receive electrical power from an electrical power system (e.g. electrical drive train) of the wind turbine, in particular not from a generator of the wind turbine. In other words, the electrical power system of the wind turbine is powered down, for example the power converter of the electrical drive train. The wind turbine rotor may be in a passive idle state. No electrical power is drawn from the generator of the wind turbine in the respective operating modes. These operating modes may accordingly be employed in low wind or high wind conditions, or when other conditions, such as a fault in the electrical power system, prevent power generation.

The auxiliary system of the wind turbine may in the first and second modes in particular be supplied with electrical power solely from the energy storage system.

The third operating mode may correspond to a full off state, in which essentially all electrical systems of the wind turbine are shut down. Transition from the third operating mode into the first or second operating mode may then for example be performed by a (manual) wake-up command. In the third operating mode, no power may accordingly be drawn from the energy storage system by the wind turbine components.

It should be clear that operation of the wind turbine may transition from the first operating mode into the second or third operating mode, may transition from the second operating mode into the third operating mode, and may further transition the reverse way, e.g. from the third into the first operating mode and from the second into the first operating mode.

The power grid may refer to an external power grid, i.e. to a power grid capable of supplying electrical power to the wind turbine. It should furthermore be clear that the wind turbine may not be connected to any other external power source, such as an external Diesel generator or the like. Such external Diesel generator would for example require a relatively large amount of fuel and would thus be environmentally unfriendly, and would suffer from further drawbacks, for example when used in offshore environments. The wind turbine may for example be operated in island operation (also termed "island mode").

Operating in the first operating mode may comprise performing a wind tracking by the wind turbine to establish alignment of a rotor of the wind turbine with the wind and/or controlling an acceleration of the rotor of the wind turbine, for example by operating a pitch system. This may for example be performed to transition into a fourth mode described further below. Operating in the first operating mode may comprise operating an environmental management system (for example an air-conditioning system) to control temperature and humidity within the wind turbine. Consequently, in the first operating mode, the wind turbine may be kept in a state in which it is ready for startup and in which most, preferably all, auxiliary components are operable. This allows for a fast returning into a power generating operating mode, for example upon the clearing of a fault or the wind conditions reaching an operating range.

The predefined condition for transitioning from the first operating mode into the second operating mode may comprise or may be the operation for a predetermined amount of time in the first operating mode and/or the receipt of a respective operator command. For example, if the wind conditions are outside an operating range for a predetermined amount of time, or a fault is not cleared for a predetermined amount of time, the wind turbine enters the second operating mode in which stored energy is conserved, as the first group of auxiliary power consumers is not operated.

The method may further comprise transitioning from the first or second operating mode into the third operating mode upon receiving a respective operator command. Accordingly, the wind turbine can also be forced into the second or third operating mode.

Transitioning from the first operating mode into the second or third operating mode may comprise opening at least one switch (e.g. one or more disconnectors) between the energy storage system and the first group of auxiliary power consumers. The at least one switch may in some embodiments not affect the electrical connection between the energy storage system and the second group of auxiliary power consumers. Electrically disconnecting the first group ensures that no power is drawn by the respective power consumers from the energy storage system.

In some embodiments, transitioning from the first or second operating mode to the third operating mode may comprise opening one or more second switches (e.g. disconnector) between the energy storage system and the second group of auxiliary power consumers, and/or shutting down operation of all auxiliary power consumers of the second group and/or stopping a power output from the energy storage system. Accordingly, such measures can ensure that no further power is consumed by either the first or second group of auxiliary power consumers, thus conserving energy stored in the energy storage system.

The method may further comprise forcing the wind turbine to operate in the first operating mode or in the second operating mode in response to a respective operator command. Forcing into the operating mode may for example mean that the mode is not left even if a condition is met that would, in normal operation, lead to a transition of operation into a different mode. Forcing the wind turbine into the first operating mode may for example be beneficial when servicing the wind turbine, for example when needing to operate certain drives of the wind turbine, such as yaw drive and pitch drive, while ensuring that the wind turbine does for example not transition into power production. Forcing operation into the second operating mode may for example result in further energy conservation, for example when it is known to the operator that the wind turbine will not soon return to operation. When operating in the second operating mode and upon determining that wind conditions are or will be within a predetermined operating range, the method may further comprise transitioning operation of the wind turbine into the first operating mode for startup of the power generation of the wind turbine. This may for example occur for the purpose of powering the auxiliary system and for recharging the energy storage system. In the first operating mode, the wind may be tracked by the wind turbine (e.g. adjusting the yaw angle) and acceleration of the rotor may be started. It should be clear that such transition may only occur if there is no failure that would prevent such transition and no command that would force the wind turbine to operate in a different mode.

The predetermined charging level at which the third operating mode is entered may be selected such that the energy remaining in the energy storage system is sufficient to transition operation of the wind turbine into the first operating mode for starting up the wind turbine in the first operating mode. The remaining energy may in particular be sufficient for starting the tracking of the wind by the wind turbine (e.g. using yaw drive and operating the respective control and monitoring systems) and for effecting the acceleration of the rotor, in particular to start up the wind turbine for power production. It may in particular be sufficient to transition into the first operating mode and from there to transition into a fourth operating mode, which may be an energy harvesting mode described in more detail further below. In the third operating mode, energy stored in the energy storage system is conserved, so that the wind turbine is capable of entering such energy harvesting mode at any desired time, in particular at any time when wind conditions are conducive for operation. The wind turbine may thus start up the energy production, may start recharging the energy storage system and may supply the auxiliary system with electrical power. In the third operating mode, the auxiliary system, in particular an auxiliary power network including the auxiliary power consumers, may be disconnected from the energy storage system by means of a respective switch, for example a three-way switch switching the auxiliary power network between the energy storage system, the wind turbine electrical power system and a disconnected state. In other implementations, the energy storage system may simply be disconnected or shut down, the power consumers may be disconnected or shut down, or combinations thereof.

In an embodiment, the method further comprises operating the wind turbine in a fourth operating mode in which a generator receives rotational mechanical energy from a rotor of the wind turbine and generates electrical power by means of which the energy storage system is recharged or maintained at a predetermined charging level, and/or by means of which the auxiliary power system is at least partially powered. Such fourth operating mode (energy harvesting mode) may thus allow a self-sustained operation of the wind turbine and may ensure that the energy storage system is fully charged. The fourth operating mode may be entered from the first operating mode when wind conditions are within an operating range and the wind turbine's electrical power system is operable.

Operation may transition from the fourth operating mode into the first operating mode upon the wind conditions leaving a predetermined operating range, the energy storage system reaching a predetermined charging state, the receipt of an operator command to perform a transition, occurrence of a wind turbine fault, and/or determination of the necessity to perform one or more self-preserving activities. The method may include the checking of all of these conditions during operation in the fourth operating mode; it however is preferred that it includes at least the checking of the wind conditions, the receipt of an operator command and the occurrence of a wind turbine fault. For example, an offshore wind turbine may not leave the fourth operating mode when the energy storage system reaches a predetermined charging state, in particular a full state, but may continue operation. This way, environmental systems, such as temperature and humidity control systems, can continue to operate using the generated electrical energy without draining the energy storage system. Transitioning from the fourth into the first operating mode may for example include decelerating the rotor of the wind turbine and transitioning from the fourth operating mode into the first operating mode upon the rotor reaching a cutout rotational speed. Power generation may be stopped below the cutout rotational speed. The wind turbine rotor may in particular be brought into a safe idling state, e.g. a passive idling state. Power from the energy storage system may be used to effect deceleration of the wind turbine rotor.

Transitioning into the fourth operating mode may be initiated by at least one of a charging state of the energy storage system reaching or dropping below a predetermined value, the receipt of a respective operator command, or the wind conditions being within a predetermined operating range. Transition may start from the first, second or third operating mode and occur via the first operating mode in which the wind turbine is started up. When in the first or second operating modes, and the wind conditions are within the operating range, transition may occur into the fourth operating mode to effect a self-sustained wind turbine operation and to keep the energy storage system charged. When in the third operating mode a (manual) operator command may be necessary for re-starting the wind turbine, i.e. transitioning first into the first operating mode and then into the fourth operating mode. Transition from the first into the fourth operating mode may occur upon the wind turbine rotor reaching a predetermined cut-in speed.

In the fourth operating mode, the wind turbine generator produces electrical power which may be conditioned by a power conditioning system, e.g. a back-to-back power converter of a full converter topology or of a DFIG. Generated electrical power may be supplied to electrical consumers within or nearby the wind turbine, such as to a local consumer, e.g. a hydrogen production system.

The energy storage system may comprise at least one of a battery energy storage system (BESS); a hydrogen storage system including a hydrogen storage device and a hydrogen conversion system configured to generate electrical energy from stored hydrogen; a fly wheel energy storage system; a capacitor (e.g. super-capacitor) energy storage system; or a thermal storage system including a thermal storage device and a conversion system configured to generate electrical power from stored thermal energy. Preferably, a BESS or a hydrogen storage system are provided.

The first group of auxiliary power consumers may include components not critical for determining wind conditions sufficient for returning to operation and/or components providing command and control capabilities. For example, the auxiliary power consumers of the first group may comprise one or more actuators or drives configured to actuate a wind turbine component. The first group of auxiliary power consumers may comprise one or a combination of the yaw system of the wind turbine; a pitch system of the wind turbine; a hoisting system of the wind turbine; a service lift of the wind turbine; a cooling system of the wind turbine; and an environmental management system of the wind turbine (which may for example include temperature control and humidity control).

The second group of auxiliary power consumers may comprise one or more devices configured to provide communication and control of the wind turbine and to obtain wind conditions. For example, it may comprise a wind sensor of the wind turbine; a wind turbine controller; and/or a wind turbine communication device (which may for example provide external communication, e.g. receiving of data and control commands from an external site). Accordingly, in the first operating mode, the wind turbine may essentially be fully operable, using the power in the energy storage system, whereas in the second operating mode, control and communication systems, and possibly sensor systems, may be operational so that the wind turbine can determine when to transition back into the first operating mode and into an energy harvesting mode. Energy comprised in the energy storage system can thus be saved, in particular during times in which wind conditions are outside the operating range or the wind turbine is not operable for other reasons, such as failure of one of the components or other environmental conditions being outside an operating range (e.g. temperature).

The auxiliary power consumers of the first group may have a combined power requirement of above 100 kW, for example of 100 to 1,000 kW, or 200 to 500 kW, e.g. between 250 and 400 kW. The auxiliary power consumers of the second group may have a combined power requirement of below 50 kW, preferably below 10 kW, for example between 0.5 kW and 10 kW, or between 1 kw and 5 kW. Significant power consumption savings can thus be achieved by transitioning into the second operating mode (sleep mode).

The auxiliary power consumers of the first group may have an operating voltage above 300 V, in particular between 300 V and 1.000 V. They may be powered by a three-phase power supply. The auxiliary power consumers of the second group may have an operating voltage of less than 300 V, for example between 100 and 250 V. They may be powered by a single phase supply, in particular as no large motors need to be driven. The above values may in particular refer to the nominal power rating of the respective consumers, and the nominal voltage ratings.

The wind turbine may further comprise an uninterruptable power supply (UPS) which is separate from the energy storage system. The UPS may be configured to provide electrical power for at least one of operating at least the second group of auxiliary power consumers in case of power loss (for example due to a fault) or transition between the power source (for example transition between supply from the energy storage system, supply from the wind turbine power system, or supply from the power grid); transitioning into the third operating mode; maintaining a communication and/or control unit operable in the third operating mode, in particular for a predetermined amount of time (e.g. for between 0.5 and 2 hours); and transitioning from the third operating mode into the first or second operating mode. Such UPS can accordingly ensure that control and communication is not lost when transitioning between power sources and that the energy storage system is not further depleted, for example when transitioning into and out of the hibernate mode.

Alternatively, the energy storage system may be operated as an online UPS. Power provided to the auxiliary system may thus flow through the energy storage system (in particular all of the power). Thus, when switching between power sources, it is ensured that power is consistently provided to the second group to consumers, in particular to communication and control. A bypass including a respective switch may be provided around the energy storage system to ensure that even in case of a fault thereof, the auxiliary system can be supplied with electrical power, e.g. from the wind turbine power system or the grid (in situations in which the wind turbine is again grid-connected).

In some configurations, the method may further include operating the wind turbine in a grid operating mode in which the wind turbine electrical power system is grid-connected and the auxiliary power system is supplied with electrical power from the wind turbine electrical power system and/or the grid. Such operating mode will not be available in wind turbines that have no grid connection, e.g. that supply only local consumers, whereas it may be available in a wind turbine that has become grid-disconnected by opening a respective disconnector, e.g. due to a fault or the like. After clearance of the fault, the wind turbine can continue operation in the grid operating mode. It should be clear that in the first, second, third and fourth operating modes, the wind turbine is not grid-connected, either as it has become disconnected from the power grid or as there is no respective grid connection.

According to an embodiment of the invention, a wind turbine control system configured to operate a wind turbine that is not connected to or has become disconnected from a power grid is provided. The wind turbine comprises an auxiliary power system that includes a first group of auxiliary power consumers and a second group of auxiliary power consumers. The first group comprises at least one auxiliary power consumer having a power consumption that is higher than a power consumption of at least one auxiliary power consumer comprised in the second group, preferably of all of the auxiliary power consumers comprised in the second group. It further includes an energy storage system configured to supply electrical power to the auxiliary system. The control system comprises a processing unit configured to perform any of the embodiments and implementations of the method described herein. The control system may for example comprise a respective memory storing control instructions which when executed by the processing unit cause the processing unit to perform any of the methods described herein. By such wind turbine control system, advantages similar to the ones outlined further above may be achieved.

In an embodiment, the control system may comprise a switch (e.g. a three-way switch) arranged between the energy storage system and the auxiliary power system for switching between a power supply from the energy storage system and from the wind turbine electrical power system or power grid. Alternatively, the energy storage system may be configured as an online energy storage system (in particular online UPS) having a first electrical connection to a wind turbine electrical power system and/or power grid and a second electrical connection to the auxiliary system so that electrical power supplied from the wind turbine electrical power system or the power grid to the auxiliary power system passes through the energy storage system. A switchable bypass may furthermore be provided to provide an electrical connection from the wind turbine electrical power system or power grid to the auxiliary system that bypasses the energy storage system.

The control system may comprise a switch connected between the energy storage system and the first group of auxiliary power consumers, the switch being configured to disconnect the first group of auxiliary power consumers from the energy storage system when operating in the second operating mode and/or the third operating mode. The switch may in particular not disconnect the second group of auxiliary power consumers.

The control system may comprise an uninterruptable power supply (UPS) coupled to the second group of auxiliary power consumers and configured to provide electrical power to the second group of auxiliary power consumers. The control system may comprise a disconnector that is operable to disconnect the auxiliary power consumers of the first group and the auxiliary power consumers of the second group from the energy storage system when operating in the second and/or third operating mode. An electrical connection may be provided between the energy storage system and the UPS via which the UPS receives electrical power to power the auxiliary power consumers of the second group when operating in the second operating mode. The first and second groups may thus be powered differently in the different operating modes while requiring only one disconnector or switch.

According to a further embodiment of the present invention, an auxiliary system including the first and second groups of auxiliary power consumers and a control system having any of the configurations described herein is provided. The auxiliary system may further include the energy storage system.

According to a further embodiment of the invention, a wind turbine comprising an auxiliary system including a first group of auxiliary power consumers and a second group of auxiliary power consumers is provided. The first group comprises at least one auxiliary power consumer having a power consumption that is higher than a power consumption of at least one auxiliary power consumer comprised in the second group. It further includes an energy storage system configured to supply electrical power to the auxiliary power system and a wind turbine control system having any of the configurations described herein.

The wind turbine may further comprise the wind turbine power system and the energy storage system. The energy storage system may be arranged within a tower of the wind turbine, for example on a tower platform within the tower.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine including an auxiliary system and a control system according to an embodiment of the invention.
Fig. 2 is a schematic drawing showing a wind turbine including an auxiliary system and a control system according to an embodiment of the invention.
Fig. 3 is a schematic drawing showing a wind turbine including an auxiliary system and a control system according to an embodiment of the invention, wherein the energy storage system is implemented as an online UPS.
Fig. 4 is a schematic drawing showing a wind turbine including an auxiliary system and a control system according to an embodiment of the invention, wherein the energy storage system stores energy in the form of hydrogen.
Fig. 5 is a schematic drawing showing the transition between different operating modes of the wind turbine according to an embodiment of the invention.
Fig. 6 is a flow diagram illustrating a method of operating a wind turbine according to an embodiment of the invention.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

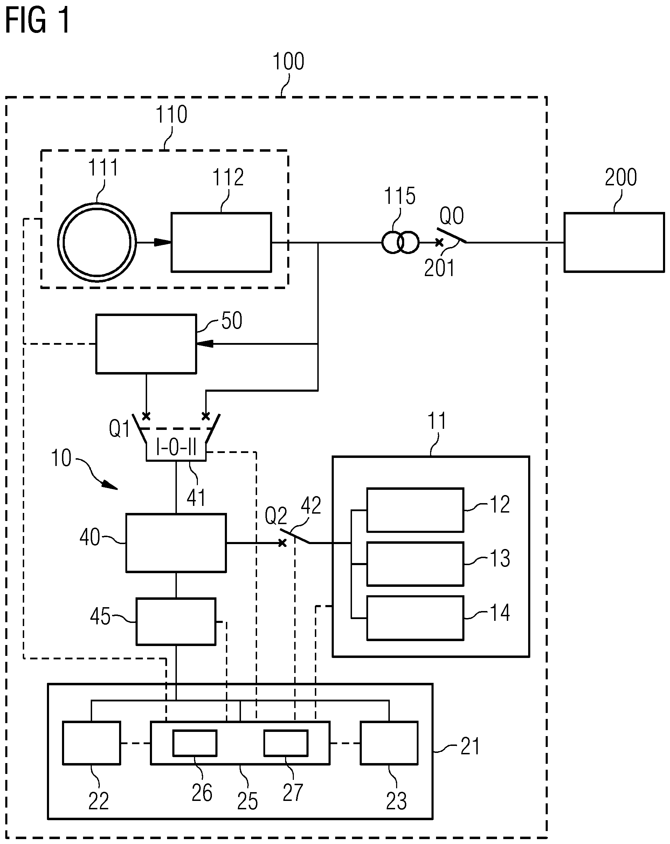

Fig. 1 schematically illustrates a wind turbine 100 according to an embodiment, which includes a wind turbine electrical power system 110 including a generator 111 and a power conditioning system 112. Power system 110 may have any of the known configurations and topologies, such as a full converter topology or a doubly-fed induction generator (DFIG) topology in which the power conditioning equipment 112, in particular a power converter, is connected to the rotor windings of the generator to condition the generated electrical power. Wind turbine transformer 115 is furthermore provided which transforms the generated electrical power to the desired voltage level before it is supplied to the external power grid 200 or alternatively to one or more local consumers. In the example if Fig. 1, the wind turbine 100 is connected to an external power grid 200, e.g. a utility grid, wherein the external power grid 200 is in particular a grid capable of supplying electrical power to the wind turbine 100, for example for keeping wind turbine 100 operational during periods of low wind or for maintenance work or in other situations in which the wind turbine does itself not generate electrical power. By means of a respective switch, in particular switchgear 201 (QO), the wind turbine 100 is disconnected from external power grid 200, for example due to a grid fault or other events causing unavailability of the grid connection. In other implementations, no connection to an external power grid 200 may be available at all (i.e. external grid 200 is optional). Such wind turbines may for example provide electrical power to one or more local consumers, wherein via such connection to local consumers, no electrical power can be supplied to the wind turbine 100. The present solution provides a self-sustained operation of the wind turbine for wind turbines that are normally grid-connected but are disconnected from the grid for a given reason (e.g. by opening switch 201) and for wind turbines that are normally not grid-connected and operate to supply power to electrical consumers within or nearby the wind turbine (local power consumers). By such self-sustained operation, damage or the potential for damage associated with long durations of wind turbine standstill may be avoided, and exposure of wind turbine components to outside ambient humidity and temperatures may be avoided, which is particularly important for offshore wind turbines.

When not grid-connected or grid-disconnected, the wind turbine 100 can be operated in an energy harvesting mode in which the power system 110 supplies the auxiliary system 10 including the auxiliary power network 40 and auxiliary power consumers 12-14; 22-25 with electrical power. However, a challenge of operating a wind turbine without a grid connection is that power from the wind is not always available to keep the auxiliary system 10 powered, for example when environmental conditions are outside the operating range of the wind turbine or there is a fault in one of the wind turbine systems necessary for power production. Environmental conditions that may affect operation of the wind turbine include wind speeds being too high or too low or ambient temperatures being too high or too low. Faults may include a failure of the wind turbine's pitch, yaw, monitoring, control or power conversion systems. Wind turbine 100 may for example be capable of operating when wind speeds are within an operational wind speed range defined by a lower cut-in wind speed Vᵢₙ and an upper cut-out wind speed Vₒᵤₜ.

Auxiliary system 10 includes an energy storage system 50 configured to provide electrical energy for operating the auxiliary system 10 (at least parts thereof) when no power is available from power system 110 or from an external grid 200. Energy storage system 50 provides electrical power into the auxiliary power network 40 which distributes it to the auxiliary power consumers. In the example of Fig. 1, a switch 41, in particular a three-way switch Q1, is used to control the source of power for the auxiliary power network 40. Switch 41 is switchable to transition the supply of power between the wind turbine electrical power system 110 and the energy storage system 50, or to disconnect both power sources (0) depending on the mode of operation.

The auxiliary power consumers are separated into at least a first group 11 and a second group 21, the power supply to which is individually controllable. Consumers of the first group 11 are generally not critical for determination of wind conditions sufficient for returning the wind turbine to operation and/or for command and control capabilities. The first group 11 for example includes relatively large power consumers, e.g. having a relatively high nominal power rating, in particular drives. Examples are a yaw system 12, a pitch system 13 and a cooling system 14. Other systems comprised in first group 11 may include crane hoists, service lifts, high-power power outlets, and environmental systems, including an AC system controlling temperature and humidity within the wind turbine. The combined power rating of the auxiliary power consumers of first group 11 may for example lie within the range of 250 kW to 400 kW. Typically, the respective consumers may receive a three-phase AC voltage supply at a voltage range between 300 and 1.000 V, e.g. 400 V or 690 V. These consumers thus consume significant amounts of electrical power and are required to keep wind turbine 100 operational, for example to track the wind direction using the yaw drive 12 and to control the rotational speed of the rotor using the pitch system 13.

The second group 21 of auxiliary power consumers may include consumers that are critical for determining the presence of wind conditions that are sufficient for returning wind turbine 100 to operation and/or for command and control capabilities. Second group 21 includes low power consumers, i.e. having a relatively low nominal power rating, such as a wind turbine controller 25 and communication equipment 23. It may further include wind sensors 22 of the wind turbine 100; however, respective wind information may also be obtained by controller 25 via a communication connection from sensors external to wind turbine 100. The second group 21 may in particular include auxiliary power consumers that receive a single phase electrical power supply having a voltage in a range between 100 and 300 V, for example 110 or 230 V. The consumers in second group 21 may have a combined nominal power rating between 0.5 and 10 kW, for example between 1 kW and 5 kW. Although the auxiliary power consumers in this second group 21 cannot actually actuate any of the wind turbine's main mechanical systems, they are capable of controlling the operation of the wind turbine 100 and to communicate with the outside, for example for receiving control commands and providing monitoring data.

The wind turbine controller 25 may comprise a processing unit 26, which may include a microprocessor, an application specific integrated circuit, a digital signal processor or the like. It further includes a memory 27 coupled to the processing unit 26 and storing control instructions which when executed by the processing unit 26 cause the processing unit 26 to perform any of the methods described herein. Memory 27 may include volatile and non-volatile memory, in particular a hard disc drive, flash memory, RAM, ROM, EEPROM and the like. Wind turbine controller 25 may include further components not explicitly shown, such as the respective input/output interfaces to the components to be controlled, as indicated by dashed lines in Fig. 1, a user interface including a display and an input means, and other components common to a computer system.

In the configuration of Fig. 1, a switch 42 in form of a breaker Q2 is connected between the energy storage system 50 and the first group 11 so as to control the supply of electrical power to the consumers of first group 11 independent of the consumers in second group 21. Power supply from energy storage system 50 to the auxiliary power consumers in the first group 11 may thus be stopped to reduce the energy consumption. As explained in more detail further below, controller 25 can operate the wind turbine 100 in different operating modes in which the power supply is selectively activated or deactivated to the consumers in first group 11.

A second and separate storage device in form of the uninterruptable power supply (UPS) 45 is furthermore connected in line on the power supply path from the energy storage system 50 to the consumers of the second group 21. By means of such UPS, it can be ensured that power interruptions of short duration, such as a transition between power sources (e.g. via switch 41) or faults in either of the available power supply systems do not lead to an immediate loss of wind turbine control, monitoring and/or communication capabilities.

The energy storage system 50 can be implemented in several different ways. Hereinafter, implementation as a battery energy storage system (BESS) and a hydrogen storage system are described. However, other implementations are conceivable, such as a fly wheel storage system, a (super)capacitor storage system, a thermal storage system and the like. The explanations provided herein are applicable to any of these possible implementations.

The control system 25 of the wind turbine 100 is implemented as the wind turbine controller and can control and/or communicate with several components of the wind turbine, including the communication system 23, the monitoring system and wind turbine sensors 22, the energy storage system 50, the electrical power system 110, the switches 41, 42, the UPS 45, and the auxiliary system 10, in particular the consumers in the first group 11 and the second group 21. It may further control the switch 201 for disconnecting the wind turbine from an external grid 200, the wind turbine transformer 115, and other components of wind turbine 100, whereas respective control and communication connections are not shown in Fig. 1.

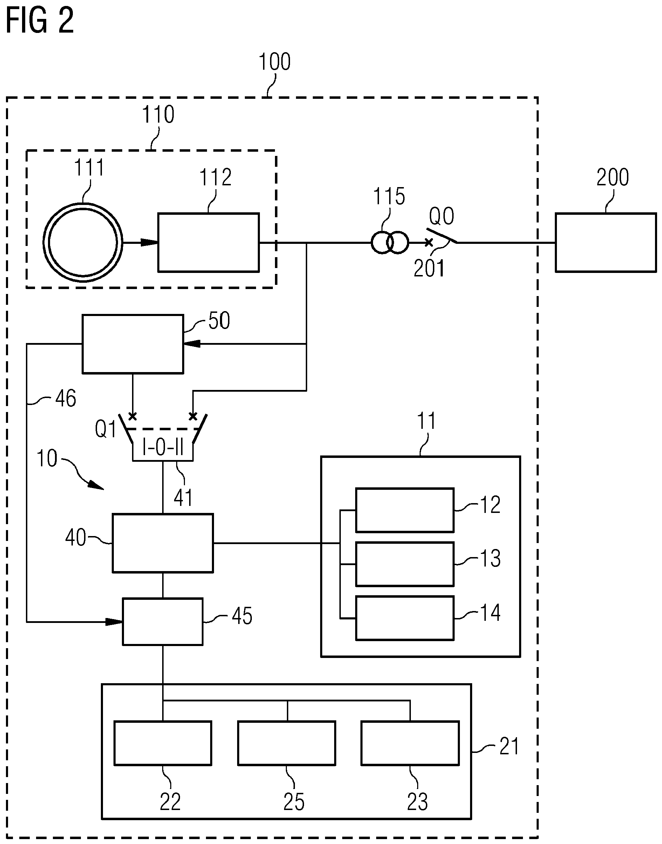

Fig. 2 schematically illustrates a further embodiment of a wind turbine 100, which is a modification of the embodiment of Fig. 1, so that the above explanations are equally applicable and only differences will be described. In Fig. 2, no second switch 42 is provided, but the first switch 41 is used to disconnect both groups 11, 21 of auxiliary power consumers from either power source, e.g. from the electrical power system 110 and the energy storage system 50. In order to be able to independently supply the first and second groups 11, 21 with electrical power from the energy storage system 50, an electrical connection 46 is provided from the energy storage system 50 to UPS 45, via which the relatively low amount of electrical power is provided to power the consumers of the second group 21 and to keep the UPS 45 operational. The supply via connection 46 may for example be a direct current (DC) supply from a battery system of storage 50 to the battery of UPS 45, or may be an alternating current (AC) supply via a respective inverter/rectifier. Switch 41 may in a respective mode be placed at position "0" in which both power sources are disconnected from auxiliary power network 40.

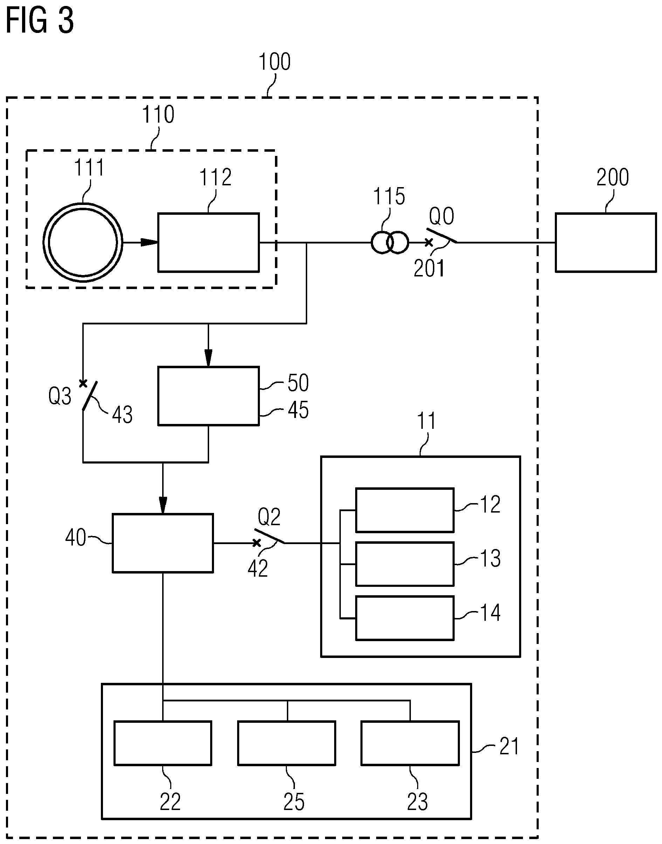

Fig. 3 likewise illustrates a possible modification of the wind turbine 100 of Fig. 1 so that the above explanations also apply to Fig. 3, and only differences are explained in more detail. In the example of Fig. 3, the energy storage system 50 acts as a UPS 45 and in particular also powers the auxiliary system 10 including auxiliary power network 40 when the wind turbine is in operation and producing power. Energy storage system 50 in particular acts as an online UPS, meaning that all power flows through the energy storage system 50. In such configuration, an additional UPS for the controller 25 or the second group 21 of auxiliary consumers may not be needed, since the online UPS in form of energy storage system 50 can ensure that power is consistently provided to the consumers of second group 21. Furthermore, a bypass circuit which is controlled by a third switch 43 is provided and bypasses the energy storage system 50. Even in case of a fault in the energy storage system 50, the auxiliary system 10 can be connected, via the bypass switch 43, to the electrical power system 110 and/or an external power grid 200, so that it can still receive electrical power. Note that in the example of Fig. 3, the first switch 41 is not required. Rather, the consumers of the second group 21 are connected without such respective selection switch to the energy storage system 50, whereas the consumers of the first group 11 are connected to the energy storage system 50 via the second switch 42, so that this group can be disconnected by opening switch 42.

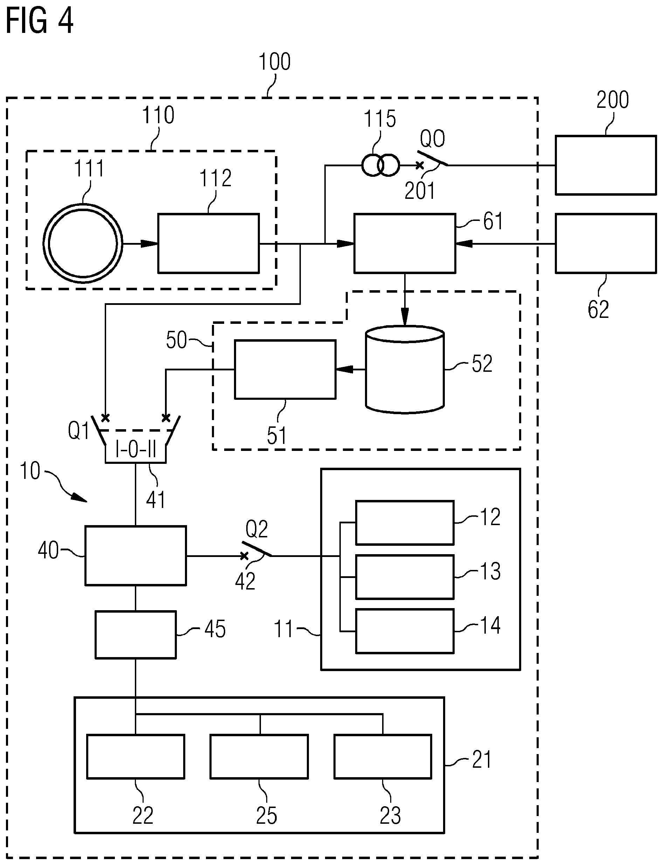

Fig. 4 illustrates an embodiment of wind turbine 100 that is again a modification of the embodiment of Fig. 1, so that the above explanations are equally applicable. In the embodiment of Fig. 4, the energy storage system 50 is implemented as a hydrogen storage system storing energy in the form of hydrogen. In such implementation, the energy storage system 50 includes a hydrogen storage device 52, in particular a hydrogen reservoir or hydrogen tank, and a hydrogen conversion system 51, which generates electrical power from stored hydrogen. Hydrogen conversion system 51 may for example be implemented as a hydrogen fuel cell. Wind turbine 100 may include a hydrogen production system 61 that uses electrical power provided by electrical power system 110 to produce hydrogen gas during wind turbine operation. Hydrogen production system 61 may receive water from a water source 62, which can be external to wind turbine 100, and produce hydrogen gas by means of hydrogen electrolysis. This may occur locally, for example within a tower and/or nacelle of the wind turbine 100. The produced hydrogen gas is then stored in the hydrogen reservoir 52 and/or in an external hydrogen collection tank (not shown). Accordingly, when the wind turbine is not operating and needs electrical energy for powering the auxiliary system 10, the fuel cell 51 can produce electrical energy from the hydrogen stored in reservoir 52 and provide it to auxiliary network 40 via switch 41.

Such system has the advantage that the wind turbine can be self-contained and that the wind turbine's auxiliary system 10 can be powered from the fuel cell 51 for extended periods of time by providing it with hydrogen from the reservoir 52. A BESS may however be more efficient regarding power conversion efficiency and may furthermore be more cost-efficient.

It should be clear that although Figs. 2, 3 and 4 do not show details of the wind turbine controller 25, this is likewise present in the embodiments of the respective figures. Furthermore, the modifications described with respect to these figures may be combined with each other, for example by using hydrogen storage in the embodiments of Figs. 1 to 3, by using an online UPS in the embodiments of Figs. 1, 2 or 4, or by using the electrical connection 46 and not switch 42 in the embodiment of Fig. 4.

Further, it should be clear that the wind turbine and in particular the auxiliary system 10 may comprise further components not illustrated in the figures, such as transformers for providing the respective auxiliary voltage levels, further circuit breakers for disconnecting consumers in case of fault, filters and the like.

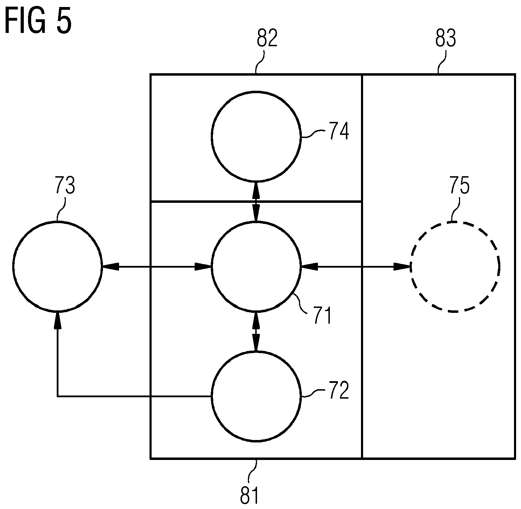

Fig. 5 schematically illustrates different operating modes in which the control system 25 may operate the wind turbine 100. Wind turbines that are connectable to a grid, e.g. via switch 201, may be operated in a grid mode 75 that includes the available operational states of the wind turbine while it is grid-connected. In the grid mode 75, the state of charge or charging level, e.g. the battery state of charge or the amount of hydrogen stored in storage device 52, is maintained so that it is available when the external grid 200 is not available or is disconnected from the wind turbine. The BESS may for example be maintained in the full state, whereas the hydrogen storage device 52 may for example be maintained in a minimum filling state. It should be clear that grid mode 75 is optional and may in particular not be available for wind turbines that do not comprise a grid connection. The wind turbine controller 25 may monitor the grid status, and when it is detected that the grid is no longer available or is disconnected, may cause operation of the wind turbine to transition into a grid-disconnected operation described below. In mode 75, the wind turbine operates in a regime 83 in which electrical power is supplied to the auxiliary system 10 from the external power grid.

Wind turbine 100 is further operable in an energy harvesting mode 74 (fourth operational mode) in which the wind turbine is operating normally and in which the generator 111 converts rotational mechanical power from the wind turbine rotor into electrical power that is supplied to the internal systems, in particular auxiliary system 10 including energy storage system 50 and possibly to a local load. Operation in energy harvesting mode 74 is determined by the prevailing wind conditions, in particular if the wind speed V is within the operating range such that Vᵢₙ<V<Vₒᵤₜ (for example, Vᵢₙ may be about 3 m/s, and Vₒᵤₜ may be about 25 m/s). It is noted that in the grid mode 75, electrical power can be supplied either from the wind turbine generator or from the external grid, whereas the energy harvesting mode 74 is a grid-disconnected mode in which either no grid connection is present at all or the grid is disconnected.

In operating regime 81, the auxiliary system 10, or at least components thereof, are provided with electrical power from the energy storage system 50. Operating modes in this regime include the local power mode 71 (first operational mode) and the sleep mode 72 (second operational mode). Furthermore, the wind turbine is operable in a hibernate mode 73 (third operational mode), in which the auxiliary system 10 is not supplied with electrical power, but the wind turbine is essentially shut down completely. The arrows in Fig. 5 illustrate possible transitions between these operating modes.

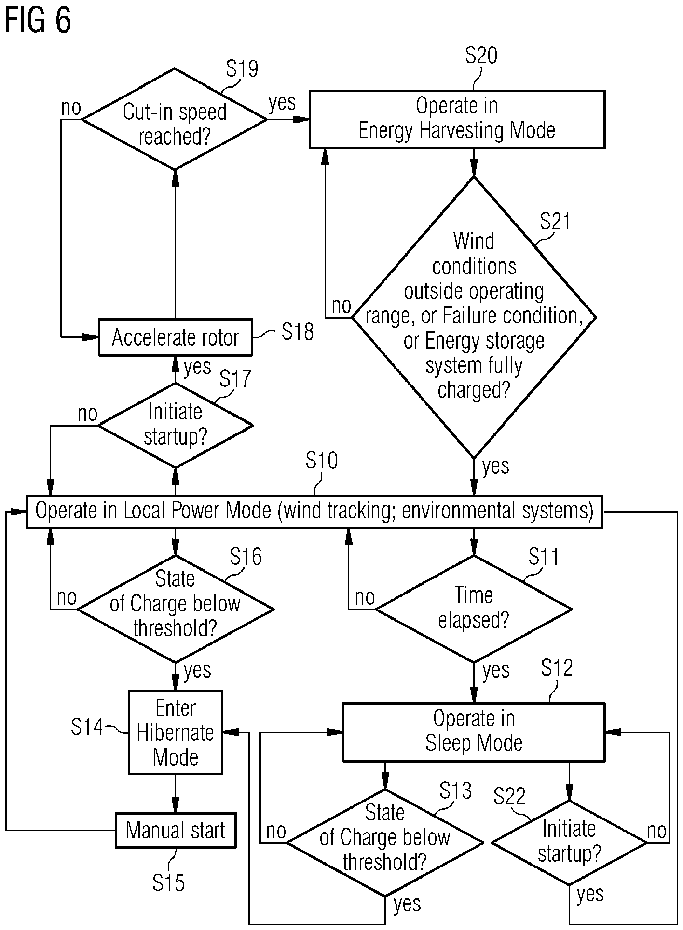

When not connected to an external power grid and prior to starting the harvesting of energy, the wind turbine may operate in the local power mode 71 illustrated in Fig. 6 as step S10. This mode may be provided to initiate operation of the wind turbine, and all wind turbine systems may be powered in this mode, in particular the auxiliary power consumers of both groups 11 and 21. In local power mode 71, wind tracking is performed to establish wind turbine rotor alignment with the wind, and system cooling, heating and de-humidification are likewise powered. If a start-up of the wind turbine is to be initiated (step S17), the pitch system 13 of the wind turbine is operated to allow the rotor speed to accelerate (step S18). If the wind turbine rotor reaches the cut-in speed in step S19, operation transitions into the energy harvesting mode 74 in step S20. Operation in the harvesting mode may continue until one or more of the conditions checked in decision step S21 are fulfilled, which include: the wind conditions are outside of the operating range; a fault occurs on the wind turbine prohibiting operation; an operator command is received to stop operation; it is determined that regularly occurring self-preservation activity is required (such as untwisting of tower cables, automated diagnosis of safety systems; etc.); and/or the energy storage system is fully charged. In the energy harvesting mode 74, the energy storage system 50 may in particular be charged to a desired state or to the full state. For an offshore wind turbine, it is preferred that when the state of charge (SOC) is at the optimal or desired level, the wind turbine remains in the energy harvesting mode, which may reduce fatigue loads and furthermore allows the environmental systems of the wind turbine to be powered from the generated electrical energy.

For an onshore wind turbine, it may be beneficial to discontinue the energy harvesting mode 74 once the SOC is at the optimal or desired level, which may conserve remaining lifetime of wind turbine components. If it is determined in step S21 that one of the above-mentioned conditions is fulfilled, operation transitions back into the local power mode (step S10). During the transition, electrical energy from the energy storage system 50 is used to safely decelerate the wind turbine rotor (e.g. pitching out of rotor blades) and to bring the wind turbine into a safe idling state, in particular a passive idling state.

The local power mode 71 may also be used during maintenance visits to the wind turbine, for example when electrical power is needed to power wind turbine components such as crane hoists, service lifts and the like. An operator command may in this case be used to force the controller 25 to operate the wind turbine in a local power mode 71, until a further operator command is received or the energy stored in energy storage system 50 is depleted.

To reduce the power consumption when the auxiliary system 10 is powered from the storage system 50, the operation transitions, after a certain time period has elapsed (step S11), into the sleep mode 72 (step S12). In this mode, only the auxiliary power consumers of the second group 21 are supplied with electrical power, but not the consumers of first group 11. This may be achieved as described above, for example by opening disconnector Q2 in Fig. 1, Fig. 3 or Fig. 4, or by bringing the switch 41 into the "0" state in Fig. 2. Consumers of second group 21 continue operation and thus allow the monitoring of wind conditions and maintain control capabilities and the possibility for an operator to provide a control command. For example, a control command to start up the wind turbine may be received via communication unit 23, or monitoring shows that the wind conditions return into the operating range, upon which it is determined in step S22 that startup of the wind turbine is to be initiated. Operation then transitions back into the local power mode S10, powering up the first group 11 of consumers, including wind tracking and the like, and further to step S17 as described above.

As the amount of energy available in energy storage system 50 is limited, depletion may occur in the local power mode 71 or the sleep mode 72. The state of charge is thus checked in the respective modes in either step S16 or step S13, and if a respective threshold, for example a minimum level of the stored energy, is reached, operation transitions into the hibernate mode 73 in step S14. In this state, neither the wind turbine electrical power system 110 nor the energy storage system 50 will provide electrical power. The transition may be effected by the wind turbine controller 25 using power from UPS 45. The transition may occur into a full power-off state. A minimum energy reserve is thus still available in the energy storage system 50 in the hibernate mode 73. This ensures that when a wake-up command is received to power-up from the hibernate mode, enough energy is available to power the auxiliary power consumers of the first and second groups 11, 21 and to return the wind turbine to operation. Such wake-up command may be a manual start command received in step S15, for example by an operator physically present within the wind turbine 100. Wind turbine operation may then transition via the local power mode 71 (step S10) into the energy harvesting mode 74, as described above, which will allow for a recharging of the energy storage system 50. The operator would generally initiate such wake-up and transition if the wind conditions are within operating range.

Such control system and operating method may accordingly allow a prolonged operation of the wind turbine without grid connection and under conditions that do not allow energy harvesting from the wind. Even if the energy storage system 50 is depleted to such extent that the hibernate mode needs to be entered, the wind turbine can still be re-started without external power supply. No additional external power source (external to the wind turbine) is present or necessary, such as a Diesel generator or the like.

Communication unit 23 may provide a remote communication interface via which command and control of the wind turbine is possible. Remote communication may for example occur via a physical network, such as a fiber optic communication network or Ethernet, or through a wireless network using terrestrial or satellite based communication hardware. Such wireless connection may support the use of a wireless supervisory control and data acquisition (SCADA) solution and may not suffer from any disconnection of array-cabling when the wind turbine is disconnected from the grid. Control system 25 may furthermore provide a local control interface. Control system 25 may be configured to stop, start and/or position the wind turbine in response to receiving respective local and/or remote user commands. Furthermore, by respective local or remote user commands, the control system 25 may force the wind turbine to transition operation into and remain in either one of the local power mode 71, the sleep mode 72 or the hibernate mode 73. For example, forcing the wind turbine into sleep mode or hibernate mode may provide the benefit of conserving energy stored in energy storage system 50 during periods for which the operator knows that the wind turbine will not be returning to operation. As indicated above, forcing operation in the local power mode 71 may be beneficial for certain maintenance operations.

The beneficial effects, in particular conservation of stored energy, may result from the presence of at least two operating modes when the wind turbine is not grid connected and power is not provided by the electrical power system, for example by the local power mode in combination with the sleep mode and/or the hibernate mode. The further described modes are thus not necessary for achieving this effect and are thus optional.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a wind turbine, wherein the wind turbine is not connected to or has become disconnected from a power grid (200) configured to supply electrical power to the wind turbine (100), wherein the method comprises:
- operating the wind turbine (100) in a first operating mode (71) in which an auxiliary system (10) of the wind turbine is supplied with electrical power from an energy storage system (50) of the wind turbine, wherein in the first operating mode (71), a first group (11) of auxiliary power consumers (12, 13, 14) of the auxiliary system (10) and a second group (21) of auxiliary power consumers (22, 23, 24) of the auxiliary system (10) are supplied with electrical power from the energy storage system (50), wherein the first group (11) comprises at least one auxiliary power consumer having a power consumption that is higher than a power consumption of at least one auxiliary power consumer comprised in the second group (21); and
- upon fulfillment of a predefined condition, operating the wind turbine (100) in a second operating mode (72) in which the power supply from the energy storage system (50) to the first group (11) of auxiliary power consumers (12, 13, 14) is ceased and the power supply from the energy storage system (50) to the second group (21) of auxiliary power consumers (22, 23, 24) is maintained, and/or
upon a charging state of the energy storage system (50) reaching or dropping below a predetermined charging level, operating the wind turbine (100) in a third operating mode (73) in which power supply from the power storage system (50) to the first group (11) of auxiliary power consumers (12, 13, 14) is ceased and power supply from the power storage system (50) to the second group (21) of auxiliary power consumers (22, 23, 24) is ceased.

2. The method according to claim 1, wherein in the first operating mode (71) and in the second and/or third operating modes (72, 73), the auxiliary system (10) does not receive electrical power from an electrical power system (110) of the wind turbine (100).

3. The method according to claim 1 or 2, wherein operating in the first operating mode (71) comprises performing a wind tracking by the wind turbine to establish alignment of a rotor of the wind turbine with the wind and/or controlling an acceleration of the rotor of the wind turbine (100), in particular by operating a pitch system (13), and/or operating an environmental management system to control temperature and humidity within the wind turbine (100).

4. The method according to any of the preceding claims, wherein the predefined condition for transitioning from the first operating mode (71) into the second operating mode (72) comprises the operation for a predetermined amount of time in the first operating mode (71) and/or the receipt of a respective operator command.

5. The method according to any of the preceding claims, wherein the method further comprises forcing the wind turbine to operate in the first operating mode (71), in the second operating mode (72), or in the third operating mode (73) in response to a respective operator command.

6. The method according to any of the preceding claims, wherein the method further comprises, when operating in the second operating mode (72) and upon determining that wind conditions are or will be within a predetermined operating range, transitioning operation of the wind turbine into the first operating mode (71) for starting up wind turbine power generation.

7. The method according to any of the preceding claims, wherein the predetermined charging level is selected such that the energy remaining in the energy storage system (50) when entering the third operating mode (73) is sufficient to transition operation of the wind turbine (100) into the first operating mode for starting up the wind turbine in the first operating mode.

8. The method according to any of the preceding claims, wherein the method further comprises operating the wind turbine (100) in a fourth operating mode (74) in which a generator (111) of the wind turbine receives rotational mechanical energy from a rotor of the wind turbine and generates electrical power by means of which the energy storage system (50) is recharged or maintained at a predefined charging level, and/or by means of which the auxiliary system (10) is at least partially powered.

9. The method according to claim 8, wherein the method comprises transitioning from the fourth operating mode (74) into the first operating mode (71) upon at least one of:
- the wind conditions leaving a predetermined operating range;
- the energy storage system (50) reaching a predetermined charging state;
- the receipt of an operator command to perform the transition;
- occurrence of a wind turbine fault; and
- determination of the necessity to perform one or more self-preserving activities.

10. The method according to claim 8 or 9, wherein transition into the fourth operating mode (74) is initiated by at least one of a charging state of the energy storage system (50) reaching or dropping below a predetermined value, the receipt of a respective operator command, or the wind conditions being within a predetermined operating range.

11. The method according to any of the preceding claims, wherein the energy storage system (50) comprises at least one of:
- a battery energy storage system, BESS;
- a hydrogen storage system including a hydrogen storage device (52) and a hydrogen conversion system (51)configured to generate electrical energy from stored hydrogen;
- a flywheel energy storage system;
- a capacitor energy storage system; or
- a thermal storage system including a thermal storage device and a conversion system configured to generate electrical energy from stored thermal energy.

12. The method according to any of the preceding claims, wherein the auxiliary power consumers of the first group (11) comprise one or more actuators or drives configured to actuate a wind turbine component (12, 13) and wherein the auxiliary power consumers of the second group (21) comprise one or more devices (22, 23, 24) configured to provide communication and control of the wind turbine and to obtain wind conditions.

13. The method according to any of the preceding claims, wherein the first group (11) of auxiliary power consumers comprises one or a combination of:
- a yaw system (12) of the wind turbine;
- a pitch system (13) of the wind turbine;
- a hoisting system of the wind turbine;
- a service lift of the wind turbine;
- a cooling system (14) of the wind turbine; and
- an environmental management system of the wind turbine, and/or wherein the second group (21) of auxiliary power consumers comprises one or a combination of:
- a wind sensor (22) of the wind turbine;
- a control system (25) of the wind turbine; and
- a wind turbine communication device (23).

14. The method according to any of the preceding claims, wherein the auxiliary power consumers of the first group (11) have a combined power requirement of above 100kW and wherein the auxiliary power consumers of the second group (21) have a combined power requirement of below 50kW, preferably below 10 kW, and/or
wherein the auxiliary power consumers of the first group (11) have an operating voltage above 300V, in particular between 300V and 1000V, and wherein the auxiliary power consumers of the second group (21) have an operating voltage of less than 300V, in particular between 100V and 250V.

15. The method according to any of the preceding claims, wherein the wind turbine further comprises an uninterruptable power supply (45), UPS, separate from the energy storage system (50), wherein the UPS (45) provides electrical power for at least one of:
- operating at least the second group (21) of auxiliary power consumers in case of power loss or transition between power sources;
- transitioning into the third operating mode (73);
- maintaining a communication and/or control unit operable in the third operating mode (73), in particular for a predetermined amount of time; and
- transitioning from the third operating mode (73) into the first or second operating mode (71, 72).

16. A wind turbine control system configured to operate a wind turbine (100) that is not connected to or has become disconnected from a power grid (200) configured to supply electrical power to the wind turbine (100), wherein the wind turbine comprises an auxiliary system (10) including a first group (11) of auxiliary power consumers (12, 13, 14) and a second group (21) of auxiliary power consumers (22, 23, 24), wherein the first group (11) comprises at least one auxiliary power consumer having a power consumption that is higher than a power consumption of at least one auxiliary power consumer comprised in the second group (21), and an energy storage system (50) configured to supply electrical power to the auxiliary system (10), wherein the control system (25) comprising a processing unit (26) configured to perform the method according to any one of the preceding claims.
